(19) Europäisches Patentamt
European Patent Office
Office européen des brevets

(11) EP 2 022 649 B1

(12) **EUROPEAN PATENT SPECIFICATION**

(45) Date of publication and mention of the grant of the patent:
**17.08.2011 Bulletin 2011/33**

(21) Application number: **07743089.0**

(22) Date of filing: **10.05.2007**

(51) Int Cl.:
***B60C 9/20*** *(2006.01)* ***B60C 9/00*** *(2006.01)*

(86) International application number:
**PCT/JP2007/059654**

(87) International publication number:
**WO 2007/135864 (29.11.2007 Gazette 2007/48)**

(54) **PNEUMATIC TIRE**

LUFTREIFEN

PNEUMATIQUE

(84) Designated Contracting States:
**DE ES FR GB IT**

(30) Priority: **23.05.2006 JP 2006142650**

(43) Date of publication of application:
**11.02.2009 Bulletin 2009/07**

(73) Proprietor: **Bridgestone Corporation**
**Tokyo 104-0031 (JP)**

(72) Inventor: **YAMAMOTO, Masahiko**
**c/o BRIDGESTONE CORPORATION, Technical center**
**Kodaira-shi, Tokyo 187-0031 (JP)**

(74) Representative: **Whalley, Kevin**
**Marks & Clerk LLP**
**90 Long Acre**
**London WC2E 9RA (GB)**

(56) References cited:
**EP-A1- 1 095 795**
**WO-A1-2006/077978**
**JP-A- 2000 142 025**
**JP-A- 2001 295 134**
**JP-A- 2001 295 134**
**JP-A- 2001 334 811**
**JP-A- 2002 309 442**
**JP-A- 2003 146 010**
**JP-A- 2006 224 948**
**US-A1- 2004 016 495**
**US-A1- 2005 228 107**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 022 649 B1

## Description

### Technical Field

The present invention relates to a pneumatic tire (hereinafter also simply referred to as a "tire"), and more particularly, relates to a pneumatic tire in which changes in steering stability with changes in speed, temperature environment, etc. during running are greatly reduced.

### Background Art

Currently, a belt, which is commonly used as a reinforcing member for a carcass constituting a framework of a radial tire for a passenger car, particularly, as a reinforcing member for a crown portion of the carcass, mainly includes two or more belt layers composed of rubber-coated steel cords arranged so as to be inclined with respect to the equatorial plane of the tire, in which the steel cords in the belt layers cross each other between the layers.

Furthermore, in some cases, a belt protective layer composed of rubber-coated nylon cords or the like may be disposed outside the belt in the radial direction of the tire in order to improve stability of the tire during running, in particular, stability during high-speed running, and furthermore, to improve the durability of the tire by preventing the separation of the belt layers during high-speed running, in particular, the separation which markedly occurs at the edges of the belt layers. As the structure of such a belt protective layer, a so-called cap-layer structure or the like is known. By arranging the belt protective layer including nylon cords or the like as reinforcing elements, the diameter growth of the tire during running can be suppressed, and thus the stability of the tire during running can be improved.

A titre having the features of the preamble of claim 1 is disclosed in the document US-A-2004 00 16495.

### Disclosure of Invention

### Problems to be Solved by the Invention

However, conventionally, under an environment where tire temperature increases during high-speed running, during running with a low internal pressure, or the like, the rigidity of a belt reinforcing portion decreases as the rigidity of rubber decreases, inevitably resulting in changes in the road-holding property and steering stability.

Accordingly, it is an object of the present invention to provide a pneumatic tire in which changes in steering stability with changes in speed, temperature environment, etc. during running are greatly reduced.

### Means for Solving the Problems

In order to solve the problems described above, a pneumatic tire of the present invention includes a carcass ply extending from a crown portion through both side portions to both bead parts, and a belt layer and a belt protective layer disposed on the crown portion of the carcass ply in that order from the inside to the outside in a radial direction of the tire, wherein a cord having a difference in heat shrinkage stress between 30°C and 80°C of not less than $7.0 \times 10^{-2}$ cN/dtex is used as a cord in at least one ply of the belt protective layer, and the reduction rate of the dynamic storage modulus of elasticity E' of a coating rubber of the belt layer in a temperature change from 30°C to 80°C is not less than 5%.

In the pneumatic tire of the present invention, the cord in at least one ply of the belt protective layer preferably contains at least 50% by mass or more of polyketone fibers, and preferably, the polyketone fibers have a tensile strength of not less than 10 cN/dtex, a modulus of elasticity of not less than 200 cN/dtex, and a heat shrinkage factor after dry-heat treatment at 150°C x 30 min in a range of 1% to 5%, respectively. Furthermore, preferably, the reduction rate of the dynamic storage modulus of elasticity E' of the coating rubber of the belt layer in a temperature change from 30°C to 80°C is not less than 15%.

### Advantages

According to the present invention, changes in steering stability with changes in speed, temperature environment, etc. during running can be greatly reduced.

### Brief Description of Drawings

Fig. 1 is a cross-sectional view in the width direction of a pneumatic tire according to an embodiment of the present invention.

Reference Numerals

1 tread part
2 sidewall part
3 bead part
4 bead core
5 carcass layer
6 belt layer
7 belt protective layer
8 bead filler
10 pneumatic tire

Best Modes for Carrying Out the Invention

Preferred embodiments of the present invention will be described in detail below with reference to the drawing.

Fig. 1 is a schematic cross-sectional view showing an example of a pneumatic tire according to a first embodiment of the present invention. A tire 10 of the present invention shown in the drawing has a tread part 1, a pair of sidewall parts 2 extending inward in a radial direction of the tire from both ends of the tread part 1, and a pair of bead parts 3 located at the inner ends of the sidewall parts 2, and includes a carcass layer 5 composed of at least one carcass ply (one carcass ply in the example shown) toroidally extending between a pair of bead cores 4 embedded in the respective bead parts 3. Reference numeral 8 represents a bead filler. Furthermore, the tire 10 includes a belt layer 6 composed of at least one belt ply (two inclined belt layers in the example shown) disposed outside the carcass layer 5 in a radial direction of the crown portion, and at least one ply of a belt protective layer 7 (one ply in the example shown) disposed outside the belt layer 6 in the radial direction of the tire. In this example, in the belt protective layer 7, cords are arranged substantially parallel to the equatorial plane E of the tire, and the belt protective layer 7 is disposed so as to cover the substantially overall width of the belt layer 6. The belt protective layer 7 is provided in order to prevent tire failure due to belt edge separation and may be disposed so as to cover at least both ends of the belt layer 6.

Furthermore, although not shown, as is commonly arranged in tires, in the tread part 1, tread grooves, such as a plurality of circumferential grooves extending in the circumferential direction of the tire and/or a plurality of traverse grooves extending in a direction traversing the circumferential grooves, a plurality of sipes, etc. are arranged appropriately according to the application.

In the present invention, the reduction rate of the dynamic storage modulus of elasticity E' of a coating rubber of the belt layer 6 in a temperature change from 30°C to 80°C is not less than 5%, and preferably not less than 15%. The formulation of a rubber composition for such a coating rubber is not particularly limited, and can be selected in accordance with common practice in the art.

Furthermore, in the present invention, as the cord of the belt protective layer 7, a cord having a difference in heat shrinkage stress between 30°C and 80°C of not less than 7.0 x $10^{-2}$ cN/dtex, is used.

Desirably, the cord of the belt protective layer 7 contains polyketone fibers in an amount of preferably at least 50% by mass or more, more preferably 70% by mass or more, and still more preferably 100% by mass. When the content of the polyketone fibers is 50% by mass or more, the properties, including the strength as the tire, heat resistance, and adhesion with rubber, are satisfactory.

In the present invention, by specifying each of the coating rubber of the belt layer 6 and the cord of the belt protective layer 7 as described above, when the tire temperature increases during high-speed running, during running with a low internal pressure, or the like, the rigidity of the coating rubber of the belt layer 6 decreases, and simultaneously the tension of the cord of the belt protective layer 7 increases due to the heat shrinkage of the cord. Thereby, it is possible to reduce the changes in the road-holding property and steering stability while maintaining a relatively stable road-holding shape of the tire.

That is, specifically, the operation takes place as follows:

(1) As the running speed increases, the centrifugal force generated in the belt layer 6 increases, and the protrusion of the tire increases. In this stage, strain due to rolling increases from the belt layer 6 to the tread rubber of the tread part 1, and heat is generated.

(2) As the temperature increases due to heat generation, the rigidity of the coating rubber of the belt layer 6 decreases. That is, the member rigidity of the belt layer decreases.

(3) Furthermore, as the temperature increases due to heat generation, heat shrinkage stress is generated in the cord of the belt protective layer 7, and the cord tension increases. That is, the tensile rigidity improves.

(4) Because of items (2) and (3) described above, the change in rigidity of the belt layer of the tire is reduced, and the changes in the road-holding property and steering stability are reduced.

Further, the polyketone fibers contained in the cord of the belt protective layer have a tensile strength of preferably not less than 10 cN/dtex, more preferably not less than 15 cN/dtex. If the tensile strength is less than 10 cN/dtex, the strength as the tire is insufficient.

Furthermore, the polyketone fibers contained in the cord of the belt protective layer have a modulus of elasticity of preferably not less than 200 cN/dtex, more preferably not less than 250 cN/dtex. If the modulus of elasticity is less than 200 cN/dtex, the shape-keeping property of the tire is insufficient.

Furthermore, the polyketone fibers contained in the cord of the belt protective layer have a heat shrinkage factor after dry-heat treatment at 150°C x 30 min in a range of preferably 1% to 5%, more preferably 2% to 4%. If the heat shrinkage factor after dry-heat treatment at 150°C x 30 min is less than 1%, the efficiency of paralleling due to heating in the manufacturing process of the tire is significantly decreased, the strength and rigidity as the tire-reinforcing member become insufficient. On the other hand, if the heat shrinkage factor after dry-heat treatment at 150°C x 30 min exceeds 5%, since the cord is significantly shrunk by heating in the manufacturing process of the tire, there is a concern that the shape of the resulting tire may be degraded.

Next, fibers containing at least 50% by mass or more of polyketone fibers (hereinafter abbreviated as "PK fibers") that can be used in the present invention will be described in detail.

Examples of fibers other than PK fibers include nylon, ester, rayon, polynosic, lyocell, vinylon fibers, and the like, although not particularly limited thereto.

The dry-heat shrinkage factor of the PK fibers in the present invention is the value determined by a method in which dry-heat treatment is performed in an oven at 150°C for 30 minutes, the fiber length before and after the heat treatment is measured under a load of 1/30 (cN/dtex), and calculation is made according to the formula below.

Dry-heat shrinkage factor (%) = (Lb - La)/Lb x 100 where Lb is the fiber length before the heat treatment, and La is the fiber length after the heat treatment. Furthermore, the tensile strength and tensile modulus of elasticity of the PK fibers are the values obtained by measurement according to JIS-L-1013. The tensile modulus of elasticity corresponds to the initial modulus of elasticity calculated on the basis of the load at an elongation of 0.1% and the load at an elongation of 0.2%.

As the cord that can be used in the present invention, specifically, the PK fiber cord described in detail below is preferable. That is, the PK fiber cord is a multifilament-twist PK fiber cord having a total decitex per cord of 1,000 to 20,000 decitex. When the cord having a total decitex per cord of 1,000 to 20,000 decitex is used, the cord has high rigidity and it is possible to achieve reduction in weight compared with steel cord, which is a merit of the organic fibers. If the total decitex is less than 1,000 decitex, it is not possible to obtain high rigidity sufficient for the belt protective layer 7. On the other hand, if the total decitex exceeds 20,000 decitex, the gauge of the belt protective layer 7 increases, resulting in an increase in the mass of the tire and a degradation in the quality of the tire.

Further, with respect to the maximum heat shrinkage stress of such a cord, a fixed sample with a length of 25 cm of a PK fiber cord before vulcanization, which has been subjected to commonly used dipping treatment, is heated at a heating rate of 5°C/min, and the maximum stress (unit: cN/dtex) generated in the cord at 177°C is considered as the maximum heat shrinkage stress.

Furthermore, preferably, the cord has a twist coefficient α, which is defined by the formula (I) below, of 0.25 to 1.25.

$$\alpha = T \times \sqrt{0.126 \times D/\rho} \times 10^{-3} \qquad (I)$$

(where T is the number of twists (times/100 mm), D is the total fineness (dtex) of the cord, and ρ is the density (g/cm$^3$) of the fiber material used for the cord). If the twist coefficient α of the PK fiber cord is less than 0.25, the heat shrinkage stress cannot be ensured sufficiently. On the other hand, if the twist coefficient α exceeds 1.25, the modulus of elasticity cannot be ensured sufficiently, and the reinforcing capability decreases.

As the polyketone, which is a raw material for the PK fibers, a polyketone substantially composed of repeating units represented by the general formula (II) below is preferable.

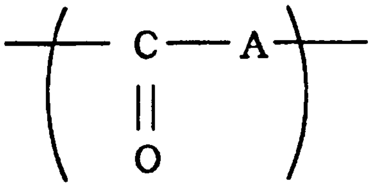

(II)

(where A represents a moiety derived from an unsaturated compound polymerized through unsaturated bonds, and may be the same or different in each repeating unit). In particular, a polyketone at least 97% by mole of repeating units of which is 1-oxotrimethylene [-$CH_2$-$CH_2$-CO-] is preferable, a polyketone at least 99% by mole of repeating units of which is 1-oxotrimethylene is more preferable, and a polyketone 100% by mole of repeating units of which is 1-oxotrimethylene is most preferable.

In such a polyketone, ketone groups may be partly bonded with each other or moieties derived from the unsaturated compound may be bonded with each other, but the ratio of the portion where the moieties derived from the unsaturated compound and the ketone groups are alternately arranged is preferably not less than 90% by mass, more preferably not less than 97% by mass, and most preferably 100% by mass.

In the formula (II) above, the unsaturated compound constituting A is most preferably ethylene, and may be an unsaturated hydrocarbon other than ethylene, such as propylene, butene, pentene, cyclopentene, hexene, cyclohexene, heptene, octene, nonene, decene, dodecene, styrene, acetylene, or allene; or a compound containing an unsaturated bond, such as methyl acrylate, methyl methacrylate, vinyl acetate, acrylamide, hydroxyethyl methacrylate, undecenoic acid, undecenol, 6-chlorohexene, N-vinylpyrrolidone, a diethyl ester of sulnyl phosphonic acid, sodium styrenesulfonate, sodium allylsulfonate, vinylpyrrolidone, or vinyl chloride.

Furthermore, with respect to the degree of polymerization of the polyketone, the limiting viscosity [η] defined by the formula (III) below is preferably in a range of 1 to 20 dL/g, and more preferably in a range of 3 to 8 dL/g.

$$[\eta] = \lim_{c \to 0} \frac{(T - t)}{(t \cdot c)} \qquad \text{(III)}$$

(where t is the passing time of hexafluoroisopropanol having a purity of not less than 98% at 25°C through a viscosity tube; T is the passing time of a diluted solution of polyketone dissolved in the hexafluoroisopropanol at 25°C through the viscosity tube; and c is the mass (g) of a solute in 100 mL of the diluted solution). When the limiting viscosity is less than 1 dL/g, the molecular weight is too low, and it is difficult to obtain a high-strength polyketone fiber cord. Moreover, troubles, such as fluffing and thread breakage, may frequently occur in the steps of spinning, drying, and drawing. On the other hand, when the limiting viscosity exceeds 20 dL/g, it takes time and cost to synthesize the polymer, and it is difficult to homogeneously dissolve the polymer, which may adversely affect the spinnability and physical properties.

Furthermore, the PK fibers preferably have a crystal structure with a crystallinity of 50% to 90% and a degree of crystal orientation of not less than 95%. At a crystallinity of less than 50%, the fibers are not sufficiently structured and sufficient strength cannot be obtained. Moreover, the shrinkage properties and dimensional stability during heating may become unstable. Therefore, the crystallinity is preferably 50% to 90%, and more preferably 60% to 85%.

The polyketone is preferably formed into fibers by (1) a method in which, after forming undrawn fibers by spinning, the undrawn fibers are subjected to multi-stage heat drawing, and in a final drawing step of the multi-stage heat drawing, drawing is performed at a predetermined temperature and drawing ratio, or (2) a method in which, after forming undrawn fibers by spinning, the undrawn fibers are subjected to heat drawing, and the fibers after completion of the heat drawing are subjected to quenching under a high tension. By forming the polyketone into fibers by the method (1) or (2), desired filaments suitable for production of the polyketone fiber cords can be obtained.

The method for forming the polyketone undrawn fibers by spinning is not particularly limited, and a known method can be employed. Specific examples of the method include a wet spinning method in which an organic solvent, such as hexafluoroisopropanol or m-cresol, is used, as disclosed in Japanese Unexamined Patent Application Publication Nos. 2-112413 and 4-228613 and Japanese Unexamined Patent Application Publication (Translation of PCT Application) No. 4-505344, and a wet spinning method in which an aqueous solution of zinc salt, calcium salt, thiocyanate, iron salt, or the like is used, as disclosed in International Publication Nos. 99/18143 and 00/09611 and Japanese Unexamined

Patent Application Publication Nos. 2001-164422, 2004-218189, and 2004-285221. In particular, the wet spinning method in which the aqueous solution of salt is used is preferable.

For example, in the wet spinning method in which the organic solvent is used, a polyketone polymer is dissolved in hexafluoroisopropanol, m-cresol, or the like at a concentration of 0.25% to 20% by mass, the resulting solution is extruded from a spinning nozzle to form fibers, and then the solvent is removed in a non-solvent bath of toluene, ethanol, isopropanol, n-hexane, isooctane, acetone, methyl ethyl ketone, or the like, followed by washing to thereby obtain undrawn fibers of polyketone.

Meanwhile, in the wet spinning method in which the aqueous solution is used, for example, a polyketone polymer is dissolved in an aqueous solution of zinc salt, calcium salt, thiocyanate, iron salt, or the like at a concentration of 2% to 30% by mass, and the resulting solution is extruded from a spinning nozzle into a coagulation bath at 50°C to 130°C to perform gel spinning, followed by desalting, drying, etc. to thereby obtain undrawn fibers of polyketone. As the aqueous solution in which the polyketone polymer is to be dissolved, it is preferable to use a mixture of zinc halide and an alkali metal halide salt or an alkaline earth metal halide salt. As the coagulation bath, water, an aqueous solution of a metal salt, or an organic solvent, such as acetone or methanol, can be used.

Furthermore, as the method of drawing the resulting undrawn fibers, a heat drawing method is preferable in which the undrawn fibers are drawn under heating at a temperature higher than the glass transition temperature of the undrawn fibers. The drawing of the undrawn fibers may be performed in one stage in the method (2) described above, but preferably is performed in multiple stages. The heat drawing method is not particularly limited. For example, a method of allowing the fibers to travel on a heat roll or a heat plate may be employed. Here, the heat drawing temperature is preferably in a range of 110°C to (melting point of polyketone), and the total drawing ratio is preferably not less than 10.

In the case where formation of polyketone fibers is performed by the method (1) described above, the temperature in the final drawing step of the multi-stage drawing is preferably in a range of 110°C to (drawing temperature in the drawing step immediately before the final drawing step minus 3°C). Furthermore, the drawing ratio in the final drawing step of the multi-stage drawing is preferably in a range of 1.01 to 1.5. Meanwhile, in the case where formation of polyketone fibers is performed by the method (2) described above, the tension applied to the fibers after completion of the heat drawing is preferably in a range of 0.5 to 4 cN/dtex, the cooling rate during the quenching is preferably not less than 30°C/sec, and the cooling end temperature of the quenching is preferably not higher than 50°C. The method for quenching the heat-drawn polyketone fibers is not particularly limited, and a known method may be employed. Specifically, a cooling method in which a roll is used is preferable. Since the resulting polyketone fibers have a large residual elastic strain, it is usually preferable to perform relaxation heat treatment so that the fiber length is smaller than the fiber length after the heat drawing. The temperature during the relaxation heat treatment is preferably in a range of 50°C to 100°C, and the relaxation ratio is preferably in a range of 0.980 to 0.999.

In order to most effectively utilize the high heat shrinkage property of the PK fiber cords, the treatment temperature during the processing and the temperature of the molded products during use are preferably near the temperature at which the PK fiber cords exhibit the maximum heat shrinkage stress (maximum heat shrinkage temperature). Specifically, since the processing temperature, such as an RFL treatment temperature in the adhesive treatment which is performed as required, or a vulcanization temperature, is 100°C to 250°C and the temperature of the heat generated from the tire materials by repeated use or high-speed rotation is 100°C to 200°C, the maximum heat shrinkage temperature is preferably in a range of 100°C to 250°C, and more preferably in a range of 150°C to 240°C.

The coating rubber with which the carcass ply cords according to the present invention are to be coated can be in any of various forms. Typical examples thereof include coating films and sheets. Furthermore, as the coating rubber, a known rubber composition may be appropriately employed without particular limitations.

## EXAMPLES

The present invention will be specifically described on the basis of examples below.

(Preparation Example of PK Fibers)

A polyketone polymer having a limiting viscosity of 5.3 produced by copolymerizing ethylene and carbon monoxide prepared by conventional processes into a perfect alternating copolymer was added to an aqueous solution containing 65% by weight of zinc chloride and 10% by weight of sodium chloride, and dissolved under stirring at 80°C for 2 hours to obtain a dope having a polymer concentration of 8% by weight.

The dope was heated to 80°C, filtered with a 20 μm sintered filter, and extruded from a 50-hole spinneret with a hole diameter of 0.10 mm into water containing 5% by weight of zinc chloride, at a temperature of 18°C, at an extrusion rate of 2.5 cc/min after passing through a 10 mm air gap so as to form coagulated filaments while drawing at a rate of 3.2 m/min.

Subsequently, the coagulated filaments were washed with a 2% by weight aqueous sulfuric acid solution at a

temperature of 25°C and then with water at a temperature of 30°C, and were taken up with a rate of 3.2 m/min.

The coagulated filaments were impregnated with 0.05% by weight (on the basis of the amount of the polyketone polymer) each of IRGANOX 1098 (manufactured by Ciba Specialty Chemicals K.K.) and IRGANOX 1076 (manufactured by Ciba Specialty Chemicals K.K.), the impregnated coagulated filaments were dried at 240°C, and then a finishing agent was applied thereto. Undrawn fibers were thereby obtained.

The finishing agent used had the following composition: lauryl oleate/bisoxyethyl bisphenol A/polyether (propylene oxide/ethylene oxide = 35/65, molecular weight: 20,000)/polyethylene oxide 10 mol added oleyl ether/polyethylene oxide 10 mol added castor oil ether/sodium stearylsulfonate/sodium dioctylphosphate = 30/30/10/5/23/1/1 (ratio in terms of % by weight).

The resulting undrawn fibers were subjected to five-stage drawing, in which drawing was performed at 240°C in a first stage, subsequently at 258°C in a second stage, at 268°C in a third stage, at 272°C in a fourth stage, and subsequently at 200°C in a fifth stage at a drawing ratio of 1.08 (drawing tension: 1.8 cN/dtex), and were taken up by a winder. The total drawing ratio of the undrawn fibers to the fibers having undergone the five-stage drawing was 17.1. The fiber original yarn had high physical properties, i.e., a strength of 15.6 cN/dtex, an elongation of 4.2%, and a modulus of elasticity of 347 cN/dtex. Furthermore, the heat shrinkage factor after dry-heat treatment at 150°C x 30 min was 4.3%. The PK fibers thus obtained were used as cords under the conditions described below.

(Examples 1 to 3 and Comparative Examples 1 to 5)

Tires having a tire size of 225/45R17 were used as tire samples. The rubber composition having the formulation shown in Table 1 below was used for the belt layer 6 for each of the tire samples. Furthermore, as the cords of the belt protective layer 7, cords composed of the PK fibers described above were used under the conditions shown in Table 2. Furthermore, as the fibers in Comparative Examples 1 and 3 to 5, nylon fibers were used for the cords under the conditions shown in Table 2. The dynamic storage modulus of elasticity E' and the steering stability during low-speed running and high-speed running in the tire to be tested were evaluated as described below.

(Dynamic storage modulus of elasticity E')

A test piece (thickness: 2 mm) of the rubber composition shown in Table 1 below was tested using a spectrometer (manufactured by Toyo Seiki Seisaku-sho, Ltd.) as a tester, under the conditions: 25°C; frequency, 52 Hz; initial load, 160 g; and dynamic strain, 2.0%.

(Steering stability during low-speed running and high-speed running)

The tire samples were each mounted on a rim 71/2J and then mounted on a test car, at an internal pressure of 220 kPa. The straight running stability, lane changeability, and cornering performance were subjectively evaluated by the driver's feeling at average speeds of 60 km/h (low speed) and 100 km/h (high speed). The evaluation results were indicated by indices using the value of Comparative Example 4 as 100 for the low-speed steering performance and using the value of Comparative Example 1 as 100 for the high-speed steering performance. Higher values indicate better results. The evaluation results are shown in Table 2 below.

[TABLE 1]

| | | |
|---|---|---|
| Formulation (parts by weight) | Natural rubber | 30 |
| | Carbon black | 60 |
| | Cobalt stearate | 1 |
| | Sulfur | 5 |

[TABLE 2]

| | | Example 1 | Example 2 | Comparative Example 1 | ~~Example 3~~ Comparative Example 2 | Example ~~4~~ 3 | Example ~~5~~ 4 | Comparative Example ~~2~~ 3 | Comparative Example ~~3~~ 4 | Comparative Example ~~4~~ 5 |
|---|---|---|---|---|---|---|---|---|---|---|
| Coating rubber of belt layer | Rubber type | A | A | A | A | A | A | A | A | A |
| | Reduction rate of E' from 30°C to 80°C(%) | 16 | 16 | 16 | 16 | 16 | 16 | 16 | 16 | 16 |
| Cord of belt protective layer | Material | PK fibers | PK fibers | PK fibers | PK fibers | PK fibers | PK fibers | Nylon | Nylon | Nylon |
| | Number of embedded cords | 50 cords /50 mm | 50 cords /50 mm | 50 cords /50 mm | 50 cords /50 mm | 50 cords /50 mm | 50 cords /50 mm | 50 cords /50 mm | 50 cords /50 mm | 50 cords /50 mm |
| | Cord structure | 1100dtex/2 | 1100dtex/2 | 1670dtex/2 | 1670dtex/2 | 1670dtex/2 | 1670dtex/2 | 1400dtex/2 | 1400dtex/2 | 1400dtex/2 |
| | Total decitex | 2200 | 2200 | 3340 | 3340 | 3340 | 3340 | 2800 | 2800 | 2800 |
| | Twist coefficient | 0.62 | 0.79 | 0.24 | 0.44 | 0.62 | 0.79 | 0.43 | 0.61 | 0.79 |
| | Difference in heat shrinkage stress between 30°C and 80°C(cN/dtex) | $7.3\times10^{-2}$ | $10.7\times10^{-2}$ | $2.5\times10^{-2}$ | $3.6\times10^{-2}$ | $7.3\times10^{-2}$ | $10.7\times10^{-2}$ | $1.1\times10^{-2}$ | $1.8\times10^{-2}$ | $2.4\times10^{-2}$ |
| Tire performance | Low-speed steering performance (index) | 110 | 118 | 108 | 115 | 121 | 125 | 104 | 102 | 100 |
| | High-speed steering performance (index) | 109 | 117 | 100 | 113 | 121 | 129 | 84 | 88 | 90 |

## Claims

1. A pneumatic tire comprising a carcass ply extending from a crown portion through both side portions to both bead parts (3), and a belt layer (6) and a belt protective layer (1) disposed on the crown portion of the carcass ply in that order from the inside to the outside in a radial direction of the tire,
**characterised in that** a cord having a difference in heat shrinkage stress between 30°C and 80°C of not less than 7.0 x $10^{-2}$ cN/dtex is used as a cord in at least one ply of the belt protective layer (7), and the reduction rate of the dynamic storage modulus of elasticity E' of a coating rubber of the belt layer in a temperature change from 30°C to 80°C is not less than 5%.

2. The pneumatic tire according to Claim 1, wherein the cord in at least one ply of the belt protective layer (7) contains at least 50% by mass or more of polyketone fibers.

3. The pneumatic tire according to Claim 2, wherein the polyketone fibers have a tensile strength of not less than 10 cN/dtex.

4. The pneumatic tire according to Claim 2, wherein the polyketone fibers have a modulus of elasticity of not less than 200 cN/dtex.

5. The pneumatic tire according to Claim 2, wherein the polyketone fibers have a heat shrinkage factor after dry-heat treatment at 150°C x 30 min in a range of 1% to 5%.

6. The pneumatic tire according to Claim 1, wherein the reduction rate of the dynamic storage modulus of elasticity E' of the coating rubber of the belt layer in a temperature change from 30°C to 80°C is not less than 15%.

## Patentansprüche

1. Luftreifen, der aufweist: eine Karkassenlage, die sich von einem Zenitabschnitt durch beide Seitenabschnitte zu beiden Wulstteilen (3) erstreckt; und eine Gürtellage (6) und eine Gürtelschutzlage (7), die auf dem Zenitabschnitt der Karkassenlage in jener Reihenfolge von innen nach außen in einer radialen Richtung des Reifens angeordnet sind,
**dadurch gekennzeichnet, dass** ein Kord, der einen Unterschied bei der Wärmeschrumpfspannung zwischen 30 °C und 80 °C von nicht weniger als 7,0 x $10^{-2}$ cN/dtex aufweist, als ein Kord in mindestens einer Lage der Gürtelschutzlage (7) eingesetzt wird, und dass die Verringerungsgeschwindigkeit des dynamischen Lagerungselastizitätsmoduls E' eines Beschichtungsgummis der Gürtellage bei einer Temperaturänderung von 30 °C bis 80 °C nicht kleiner ist als 5 %.

2. Luftreifen nach Anspruch 1, bei dem der Kord in mindestens einer Lage der Gürtelschutzlage (7) mindestens 50 Massen-% oder mehr an Polyketonfasern enthält.

3. Luftreifen nach Anspruch 2, bei dem die Polyketonfasern eine Zugfestigkeit von nicht weniger als 10 cN/dtex aufweisen.

4. Luftreifen nach Anspruch 2, bei dem die Polyketonfasern einen Elastizitätsmodul von nicht weniger als 200 cN/dtex aufweisen.

5. Luftreifen nach Anspruch 2, bei dem die Polyketonfasern einen Wärmeschrumpfungsfaktor nach der Trockenwärmebehandlung bei 150 °C x 30 min. in einem Bereich von 1 % bis 5 % aufweisen.

6. Luftreifen nach Anspruch 1, bei dem die Verringerungsgeschwindigkeit des dynamischen Lagerungselastizitätsmoduls E' des Beschichtungsgummis der Gürtellage bei einer Temperaturänderung von 30 °C bis 80 °C nicht kleiner ist als 15 %.

## Revendications

1. Bandage pneumatique, comprenant une nappe de carcasse s'étendant à partir d'une partie de sommet, à travers

les deux parties latérales, vers les deux parties de talon (3), et une couche de ceinture (6) ainsi qu'une couche de protection de la ceinture (7) agencées sur la partie de sommet de la nappe de carcasse, dans cet ordre, de l'intérieur vers l'extérieur dans une direction radiale du bandage pneumatique ;
**caractérisé en ce qu'**un câblé présentant une différence concernant la contrainte de retrait thermique entre 30°C et 80°C non inférieure à 7,0 x $10^{-2}$ cN/dtex, est utilisé comme câblé dans au moins une nappe de la couche de protection de la ceinture (7), le taux de réduction du module d'élasticité de stockage dynamique E' d'une gomme de revêtement de la couche de ceinture en présence d'un changement de température de 30°C à 80°C n'étant pas inférieur à 5%.

**2.** Bandage pneumatique selon la revendication 1, dans lequel le câblé dans au moins une nappe de la couche de protection de la ceinture (7) contient au moins 50% en masse ou plus de fibres de polycétone.

**3.** Bandage pneumatique selon la revendication 2, dans lequel les fibres de polycétone présentent une résistance à la traction non inférieure à 10 cN/dtex.

**4.** Bandage pneumatique selon la revendication 2, dans lequel les fibres de polycétone présentent un module d'élasticité non inférieur à 200 cN/dtex.

**5.** Bandage pneumatique selon la revendication 2, dans lequel les fibres de polycétone présentent un facteur de retrait thermique après un traitement à l'air chaud à 150° x 30 minutes compris dans un intervalle allant de 1% à 5%.

**6.** Bandage pneumatique selon la revendication 1, dans lequel le taux de réduction du module d'élasticité de stockage dynamique E' de la gomme de revêtement de la couche de ceinture en présence d'un changement de température de 30°C à 80°C n'est pas inférieur à 15%.

FIG.1

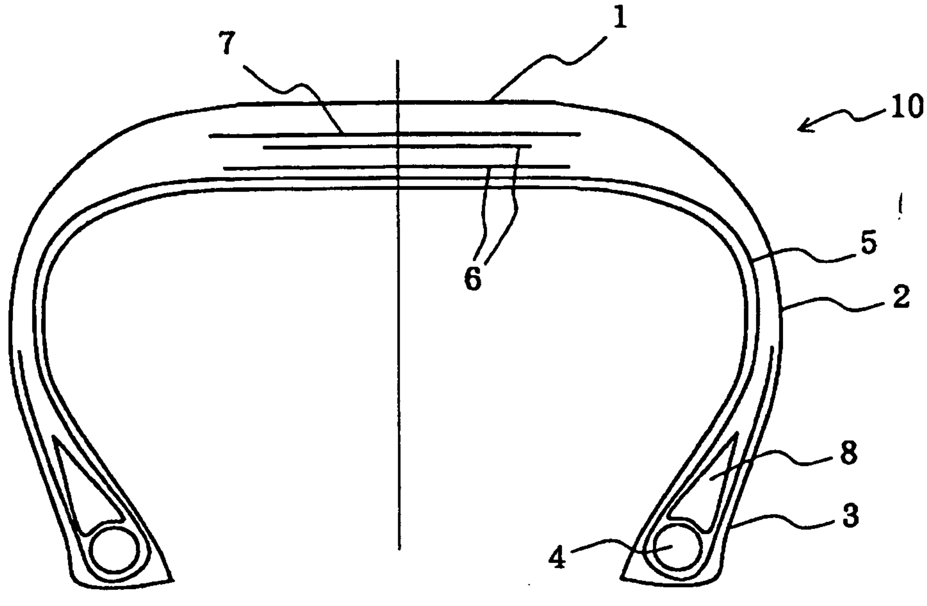

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040016495 A
- JP 2112413 A
- JP 4228613 A
- JP 4505344 PCT
- WO 9918143 A
- WO 0009611 A
- JP 2001164422 A
- JP 2004218189 A
- JP 2004285221 A